# EUROPEAN PATENT APPLICATION

(11) **EP 2 339 394 A2**
(43) Date of publication of application: **29.06.2011**
(21) Application number: 10196468.2
(22) Date of filing: 22.12.2010
(51) Int. Cl.: G02F 1/13357

(54) **Lead wire isolation structure and liquid crystal module**

(30) Priority: 22.12.2009 JP 2009290589
(71) Applicant: Funai Electric Co., Ltd., Daito-shi, Osaka 574-0013 (JP)
(72) Inventor: Fukuda, Yutaka, Daito-shi, Osaka 574-0013 (JP)
(74) Representative: Grünecker, Kinkeldey, Stockmair & Schwanhäusser Anwaltssozietät

(57) **Abstract**

A lead wire isolation structure for a liquid crystal module includes a pair of lead wires and an isolation member. The liquid crystal module includes a rear frame and a U-shaped cold cathode tube that is disposed inside the rear frame. The lead wires are configured to be electrically coupled to the U-shaped cold cathode tube. The isolation member is made of an electrical insulating material. The isolation member has a pair of lead wire supports at spaced apart locations on the isolation member. The lead wires are supported in the lead wire supports, respectively.

## Description

### CROSS-REFERENCE TO RELATED APPLICATIONS

This application claims priority to Japanese Patent Application No. 2009-290589 filed on December 22, 2009. The entire disclosure of Japanese Patent Application No. 2009-290589 is hereby incorporated herein by reference.

### BACKGROUND

### Field of the Invention

The present invention generally relates to a lead wire isolation structure. More specifically, the present invention relates to a lead wire isolation structure for a liquid crystal module.

### Background Information

With a conventional backlight type of liquid crystal module, a plurality of U-shaped cold cathode tubes is installed as a backlight inside a rear frame of the liquid crystal module. Lead wires of each of the cold cathode tubes are taken out through holes in the rear frame to a rear face side of the rear frame. Connectors at distal ends of the lead wires are connected to connectors of an inverter board attached to the rear face of the rear frame. Since high voltage is applied to the inverter board and the lead wires of the cold cathode tubes, if the lead wires should come into proximity or contact with each other, there is the risk that an electrical discharge will lead to fire or smoke.

There is a known liquid crystal display device in which two cable housing grooves are formed in a backlight chassis. A high-voltage cable and a low-voltage cable coming from the backlight are housed in the cable housing grooves to maintain a distance between the two cables and to suppress fluctuation in the amount of leakage (see Japanese Patent No. 3,673,781, for example).

There is also a known structure in which a plurality of connectors are installed spaced apart on a main substrate, and the connectors are connected to a plurality of connectors at an lower end of a relay substrate so that the relay substrate is attached substantially vertically. Cables extending out of the main substrate are passed through a space bounded by the main substrate, the connectors, and the lower end edges of the relay substrate, which restricts positions of the cables (see Japanese Laid-Open Patent Application Publication No. 2009-49180, for example).

Further, it is known that power supply lead wires of a side lamp in a liquid crystal display device are sandwiched between a plastic chassis having a dowel hole and an aluminum chassis having a dowel, and fixed by the dowel hole and the dowel (see Japanese Laid-Open Patent Application Publication No. H10-96923, for example).

### SUMMARY

An improved liquid crystal module was conceived in light of the above-mentioned situations. One object of the present disclosure is to provide a lead wire isolation structure for a liquid crystal module, in which lead wires of a cold cathode tube are reliably isolated with a simple structure.

In accordance with one aspect of the present disclosure, a lead wire isolation structure for a liquid crystal module includes a pair of lead wires and an isolation member. The liquid crystal module includes a rear frame and a U-shaped cold cathode tube that is disposed inside the rear frame. The lead wires are configured to be electrically coupled to the U-shaped cold cathode tube. The isolation member is made of an electrical insulating material. The isolation member has a pair of lead wire supports at spaced apart locations on the isolation member. The lead wires are supported in the lead wire supports, respectively.

With the lead wire isolation structure for a liquid crystal module, it is possible to provide a lead wire isolation structure for a liquid crystal module, in which lead wires of a cold cathode tube are reliably isolated with a simple structure.

These and other objects, features, aspects and advantages will become apparent to those skilled in the art from the following detailed description, which, taken in conjunction with the annexed drawings, discloses a preferred embodiment.

### BRIEF DESCRIPTION OF THE DRAWINGS

Referring now to the attached drawings which form a part of this original disclosure:

FIG. 1 is a cross sectional view of a liquid crystal module with a lead wire isolation structure in accordance with a first embodiment;

FIG. 2 is a partial perspective view of a rear side of the liquid crystal module having the lead wire isolation structure of the first embodiment;

FIG. 3 is a perspective view of an isolation member for the lead wire isolation structure of the first embodiment;

FIG. 4 is an enlarged, partial cross sectional view of the liquid crystal module illustrating an attached state of the isolation member of the first embodiment;

FIG. 5 is a partial perspective view of a rear side of a liquid crystal module having a lead wire isolation structure of a second embodiment;

FIG. 6 is a perspective view of an isolation member for the lead wire isolation structure of the second embodiment;

FIG. 7 is a partial perspective view of a rear side of a liquid crystal module having a lead wire isolation structure of a third embodiment;

FIG. 8 is a perspective view of an isolation member for the lead wire isolation structure of the third embodiment;

FIG. 9 is an enlarged, partial cross sectional view of the liquid crystal module illustrating an attached state of the isolation member of the third embodiment;

FIG. 10 is a partial perspective view of a rear side of a liquid crystal module having a lead wire isolation structure of a fourth embodiment;

FIG. 11 is a perspective view of an isolation member for the lead wire isolation structure of the fourth embodiment;

FIG. 12 is a partial perspective view of a rear side of a liquid crystal module having a lead wire isolation structure of a fifth embodiment; and

FIG. 13 is a perspective view of an isolation member for the lead wire isolation structure of the fifth embodiment.

### DETAILED DESCRIPTION OF EMBODIMENTS

A preferred embodiment will now be explained with reference to the drawings. It will be apparent to those skilled in the art from these disclosures that the following descriptions of the preferred embodiment are provided for illustration only and not for the purpose of limiting the invention as defined by the appended claims and their equivalents.

### FIRST EMBODIMENT

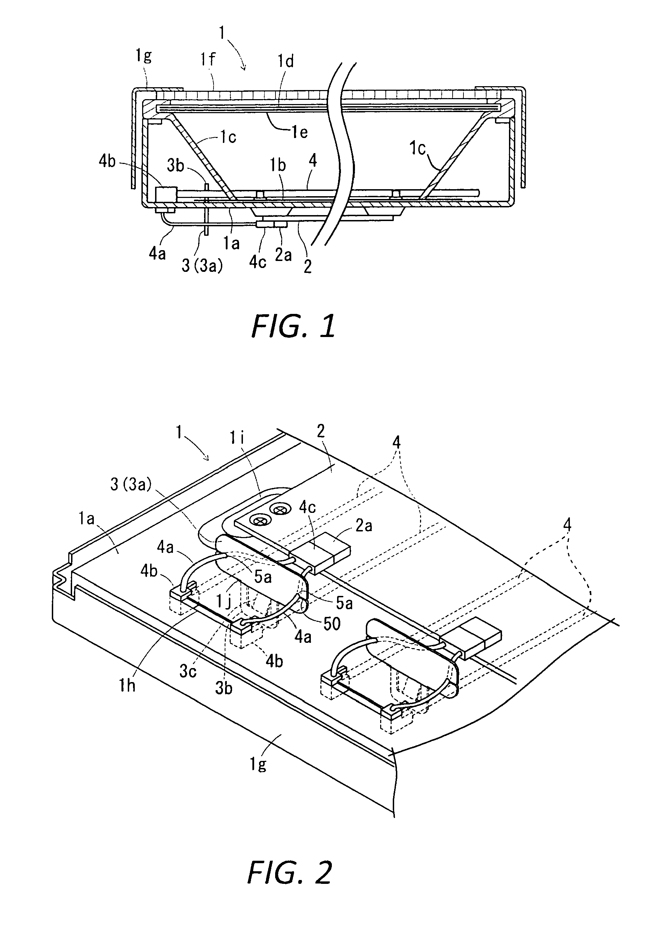

FIGS. 1 and 2 illustrate a first embodiment of a lead wire isolation structure for a liquid crystal module 1. As seen in FIGS. 1 and 2, the liquid crystal module 1 has an inverter board 2, a plurality of isolation members 3 and a plurality of U-shaped cold cathode tubes (e.g., U-shaped cold cathode tube and additional U-shaped cold cathode tube) 4.

As seen in FIG. 1, the liquid crystal module 1 also includes a rear frame 1a, a light reflecting sheet 1b, a pair of lamp frames 1c, a plurality of optical sheets (e.g., light diffusing sheets) 1d and 1e, a liquid crystal panel 1f and a bezel 1g. The light reflecting sheet 1b is installed inside the rear frame 1a that is made of sheet metal. Over the light reflecting sheet 1b, the cold cathode tubes 4 bent in a U shape are installed parallel to each other with in the rear frame 1a. Curved parts of the cold cathode tubes 4 (e.g., the opposite side from end portions) are covered with one of the lamp frames 1c. The optical sheets 1d and 1e and the liquid crystal panel If are disposed over the cold cathode tubes 4. Four sides of the liquid crystal panel 1f are surrounded by the bezel 1g. The cold cathode tubes 4 are disposed adjacent to each other.

Two lead wires 4a are soldered to two pin terminals of each of the U-shaped cold cathode tubes 4, respectively, and are electrically coupled to each of the U-shaped cold cathode tubes 4. Lamp sockets 4b are attached to two end portions of each of the cold cathode tubes 4, respectively. The lamp sockets 4b are made of an electrically insulating rubber and house soldered portions. The lamp sockets 4b are fitted into and fixed at end portions of slots (e.g., openings) 1h formed spaced apart from an end edge of a rear plate of the rear frame 1a. The lead wires 4a of each of the cold cathode tubes 4 are taken out to a rear face side of the rear plate of the rear frame 1a through the lamp sockets 4b and the slots 1h.

The inverter board 2 is screwed to bulging constricted parts 1 i that are formed on a rear face of the rear plate of the rear frame 1a. Connectors 4c are attached at distal ends of the two lead wires 4a of the cold cathode tubes 4. The connectors 4c are connected to connectors 2a disposed spaced apart along an end edge of the inverter board 2. Each of the isolation members 3 is disposed between the two lead wires 4a of each of the cold cathode tubes 4 so that the two lead wires 4a do not come into proximity or contact with each other.

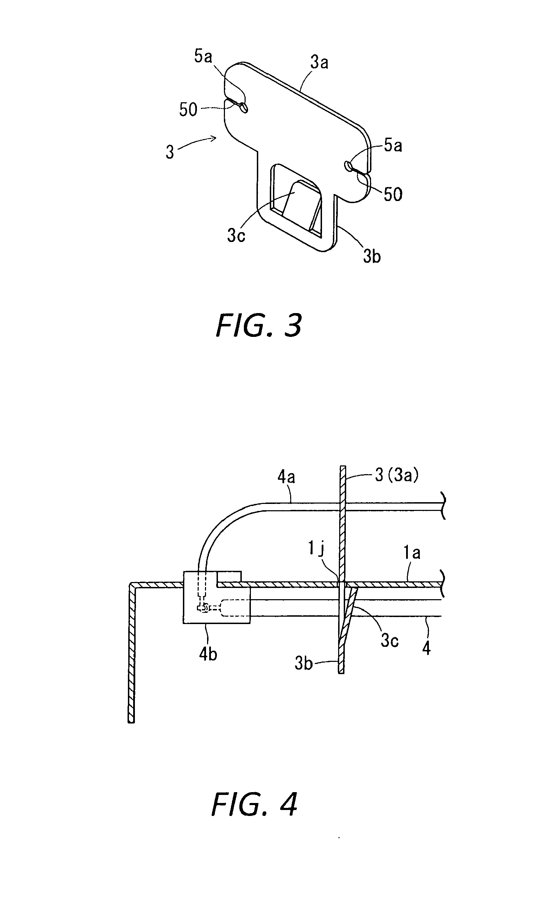

Each of the isolation members 3 is injection molded from a material that is electrically insulating, and preferably one that is fire retardant, such as a polycarbonate or other such thermoplastic synthetic resin that has undergone a fire retarding treatment. Each of the isolation members 3 is integrally formed as one-piece, unitary member. As seen in FIG. 3, each of the isolation members 3 has a rectangular plate body 3a, a U-shaped insertion tab 3b and a retainer hook 3c. The U-shaped insertion tab 3b is integrally formed at a lower end portion of the rectangular plate body 3a. The retainer hook 3c is formed at a lower part of the insertion tab 3b such that the retainer hook 3c rises up at a slight angle relative to the insertion tab 3b. The rectangular plate body 3a has a pair of left and right lead wire supports 5a in the form of round holes at spaced apart locations of the plate body 3a, and a pair of cut-out grooves 50. The lead wire supports 5a are formed spaced apart by a specific amount from each other on both sides (e.g., opposite side end portions) of the rectangular plate body 3a. The cut-out grooves 50 are formed at both side ends of the plate body 3a such that the cut-out grooves 50 extend to the lead wire supports 5a, respectively. The spacing between the pair of left and right lead wire supports 5a is determined after taking into account the length of the lead wires 4a and the amount of voltage to be applied, so that there will be no risk that the lead wires 4a will come into proximity or contact with each other and cause fire or smoke. Also, the lead wire supports 5a can have any shape, so long as the shape allows the lead wires 4a to be easily supported and does not allow the lead wires 4a to come loose easily.

As seen in FIGS. 2 and 4, the isolation members 3 are disposed between the two lead wires 4a of the cold cathode tubes 4, respectively. The insertion tab 3b is inserted into a slit 1j formed in the rear plate of the rear frame 1a. The retainer hook 3c is latched from below (i.e., from a front face side of the rear frame 1a) to an end edge of the slit 1j, which attaches the isolation member 3 to the rear frame 1a so that it will not come loose. The two lead wires 4a of each of the cold cathode tubes 4 are passed through the cut-out grooves 50 and clamped between the pair of left and right lead wire supports 5a. As a result, the positions of the lead wires 4a are fixed while maintaining a state in which they are isolated at a spacing that is equal to the spacing between the lead wire supports 5a.

With this lead wire isolation structure for the liquid crystal module 1, the two lead wires 4a of each of the cold cathode tubes 4 are supported, isolated, and fixed by the pair of left and right lead wire supports 5a of respective one of the isolation members 3. Thus, not only will the relative positional relation between the two lead wires 4a of each of the cold cathode tubes 4 supported by the pair of left and right lead wire supports 5a of the plate bodies 3a, but the positions of the lead wires 4a will themselves be fixed, without moving, so all of the problems attributable to movement of the lead wires 4a can be solved. Thus, the danger of fire or smoke being caused by an electrical discharge due to proximity or contact between the two lead wires 4a of each of the cold cathode tubes 4, as well as other problems attributable to movement of the lead wires 4a, can be eliminated. Also, the isolation member 3 can be easily attached so that it will not come loose, merely by inserting the insertion tab 3b having the retainer hook 3c into the slit 1j of the rear frame 1 a. Furthermore, the lead wires 4a can be easily and securely supported and isolated merely by fitting them through the cut-out grooves 50 of the isolation member 3 into the pair of left and right lead wire supports 5a. Thus, the above-mentioned lead wire isolation structure is also favorable in terms of ease of assembly work.

With the liquid crystal module 1, the cold cathode tubes 4 that are bent in a U shape are installed inside the rear frame 1a. However, what are known as pseudo-U-shaped cold cathode tubes, in which the terminals at one end of two straight cold cathode tubes that are parallel to each other are connected with a connector plate can be installed inside the rear frame 1a. Also, with the liquid crystal module 1, the lamp sockets 4b are individually attached to the two ends of the U-shaped cold cathode tubes 4. However, one-piece lamp socket can be attached instead.

### SECOND EMBODIMENT

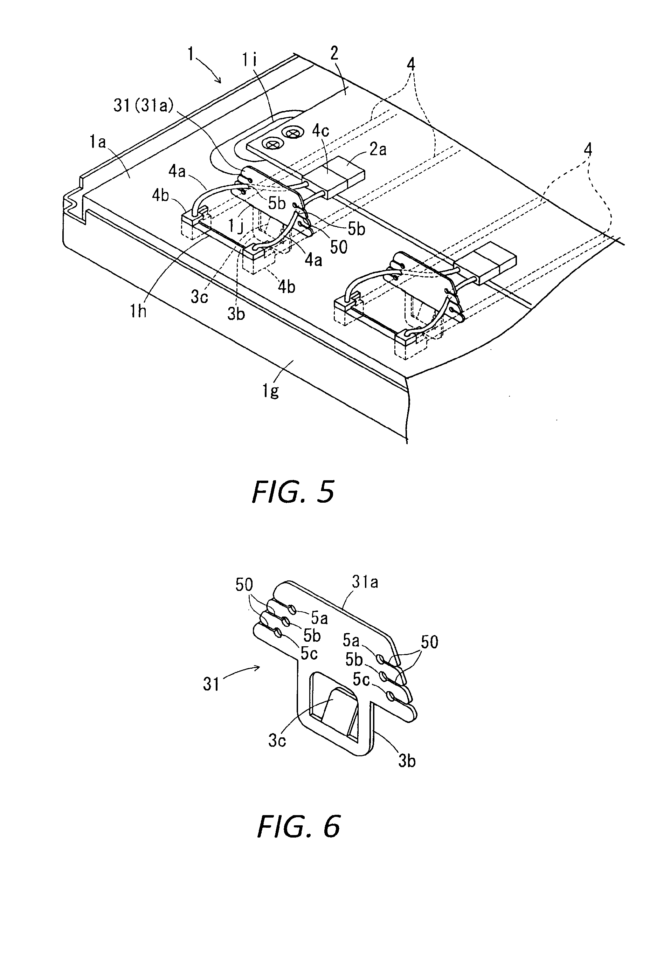

Referring now to FIGS. 5 and 6, a lead wire isolation structure for the liquid crystal module 1 in accordance with a second embodiment will now be explained. A plurality of isolation members 31 of this second embodiment is utilized in place of the isolation members 3 of the first embodiment.

In view of the similarity between the first and second embodiments, the parts of the second embodiment that are identical to the parts of the first embodiment will be given the same reference numerals as the parts of the first embodiment. In any event, the descriptions of the parts of the second embodiment that are substantially identical to the parts of the first embodiment may be omitted for the sake of brevity. However, it will be apparent to those skilled in the art from this disclosure that the descriptions and illustrations of the first embodiment also apply to this second embodiment, except as discussed and/or illustrated herein.

As seen in FIG. 5, the isolation members 31 are used to isolate the two lead wires 4a of the cold cathode tubes 4, respectively. Each of the isolation members 31 is integrally formed as one-piece, unitary member. As seen in FIG. 6, each of the isolation members 31 has an isosceles trapezoid-shaped plate body 31a, the U-shaped insertion tab 3b and the retainer hook 3c. The U-shaped insertion tab 3b is formed at a lower end of the plate body 31 a. A plurality of pairs of left and right lead wire supports (e.g., lead wire support and additional lead wire support) 5a, 5b, and 5c in the form of round holes and having difference spacings in between them are formed on both sides of the trapezoid-shaped plate body 31a. Cut-out grooves 50 that extend to the lead wire supports 5a, 5b, and 5c are formed on both side ends of the plate body 31a.

As seen in FIG. 5, the isolation members 31 are disposed between the two lead wires 4a of the cold cathode tubes 4. The insertion tab 3b is inserted into the slit 1j of the rear frame 1a. The retainer hook 3c is latched from below to the end edge of the slit 1j, which attaches the isolation member 31 to the rear frame 1a so that it will not come loose. The two lead wires 4a of each cold cathode tube 4 are supported by one of the pairs of left and right lead wire supports 5a, 5b and 5c selected as having the optimal spacing in between them (the lead wire supports 5b are selected in FIG. 5), and are isolated and fixed at the optimal spacing in between.

The rest of the structure of the lead wire isolation structure in the second embodiment is the same as that of the lead wire isolation structure in the first embodiment, so the components that are the same in FIG. 5 are numbered the same, and redundant descriptions will be omitted.

In addition to have the effects exhibited by the lead wire isolation structure of the first embodiment, the lead wire isolation structure of the second embodiment also exhibits an effect whereby the pair of left and right lead wire supports 5a, 5b and 5c with the best spacing is selected according to the length of the lead wires 4a and the amount of voltage to be applied, and the lead wires 4a are isolated and fixed at the optimal spacing in between them. Thus, the lead wire isolation structure of the second embodiment can be used for different liquid crystal modules with different lengths of the lead wires 4a of the cold cathode tubes 4 or different amounts of applied voltage.

### THIRD EMBODIMENT

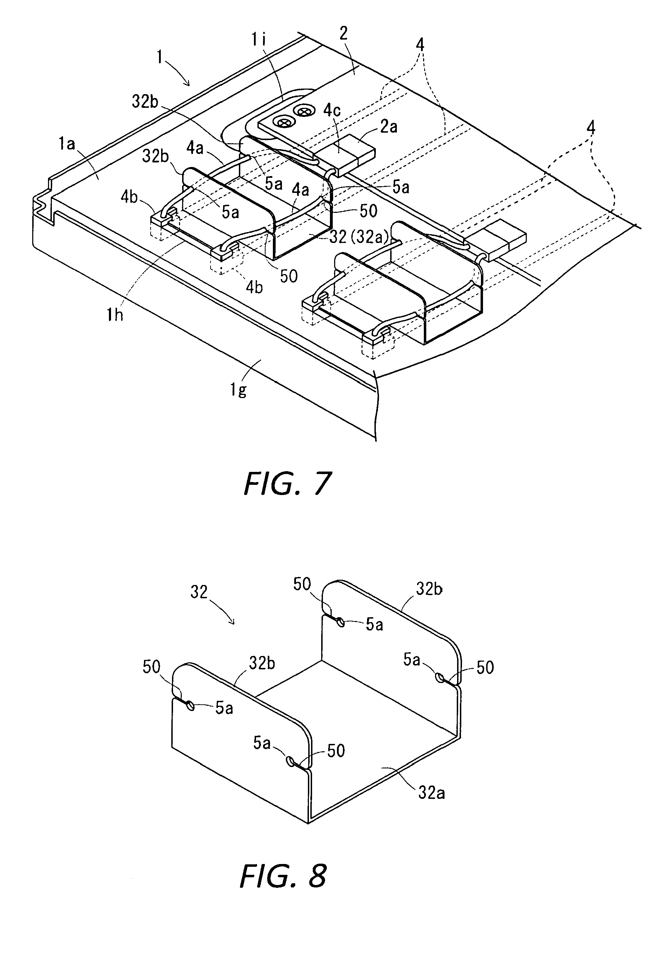

Referring now to FIGS. 7 to 9, a lead wire isolation structure for the liquid crystal module 1 in accordance with a third embodiment will now be explained. A plurality of isolation members 32 of this third embodiment is utilized in place of the isolation members 3 of the first embodiment.

In view of the similarity between the first and third embodiments, the parts of the third embodiment that are identical to the parts of the first embodiment will be given the same reference numerals as the parts of the first embodiment. In any event, the descriptions of the parts of the third embodiment that are substantially identical to the parts of the first embodiment may be omitted for the sake of brevity. However, it will be apparent to those skilled in the art from this disclosure that the descriptions and illustrations of the first embodiment also apply to this third embodiment, except as discussed and/or illustrated herein.

As seen in FIG. 7, the isolation members 32 are used to isolate the two lead wires 4a of the cold cathode tubes 4. Each of the isolation members 32 is integrally formed as one-piece, unitary member. As seen in FIG. 8, each of the isolation members 32 has a square bottom plate 32a and a pair of rectangular vertical plates 32b at two ends (e.g., opposite side edges) of the square bottom plate 32a. The pair of left and right lead wire supports 5a in the form of round holes is formed at both sides of each of the vertical plates 32b. Cut-out grooves 50 that extend to these lead wire supports 5a are formed from both side ends of each of the vertical plates 32b.

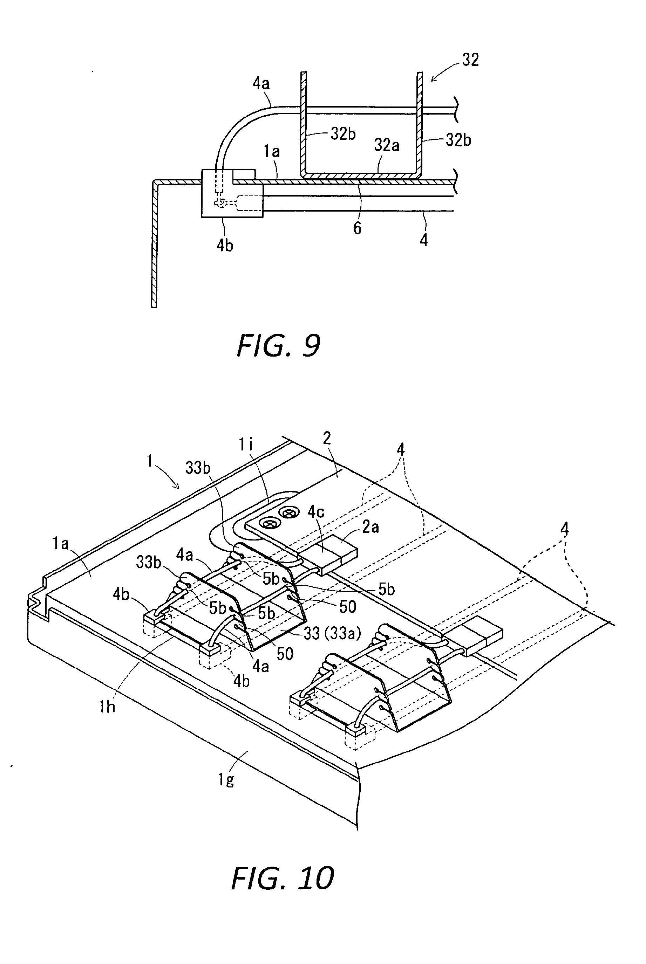

As seen in FIG. 7, the isolation members 32 are disposed between the two lead wires 4a of the cold cathode tubes 4. As seen in FIG. 9, the bottom plate 32a is fixedly attached to the rear face of the rear frame 1a with a quick fixing means such as double-sided adhesive tape 6. The two lead wires 4a of each of the cold cathode tubes 4 are supported at two places each by the pair of left and right lead wire supports 5a of one of the vertical plates 32b and by the pair of left and right lead wire supports 5a of the other vertical plate 32b. Thus, the two lead wires 4a can be simply isolated and fixed at the optimal spacing between them with the isolation members 32.

The rest of the structure of the lead wire isolation structure in the third embodiment is the same as that of the lead wire isolation structure in the first embodiment, so the components that are the same in FIGS. 7 and 9 are numbered the same, and redundant descriptions will be omitted.

With the lead wire isolation structure of the third embodiment, the two lead wires 4a of each cold cathode tube 4 are uniformly isolated at two locations by the pair of left and right lead wire supports 5a formed at each of the two vertical plates 32b of the isolation member 32. Thus, isolation stability can be improved. Furthermore, since movement of the lead wires 4a is greatly suppressed, the risk of fire or smoke caused by proximity or contact between the lead wires 4a can be effectively prevented.

Since the isolation members 32 have good stability (or stationariness), it can be left in a free state rather than being fixed to the rear frame with the double-sided adhesive tape 6. Even if the lead wires 4a of the cold cathode tubes 4 are supported by the pair of left and right lead wire supports 5a of each of the vertical plates 32b of the isolation members 32 disposed in this free state, the lead wires 4a can be isolated with their relative positional relation being fixed. Thus, the risk of fire or smoke due to proximity or contact between the lead wires 4a can be prevented.

### FOURTH EMBODIMENT

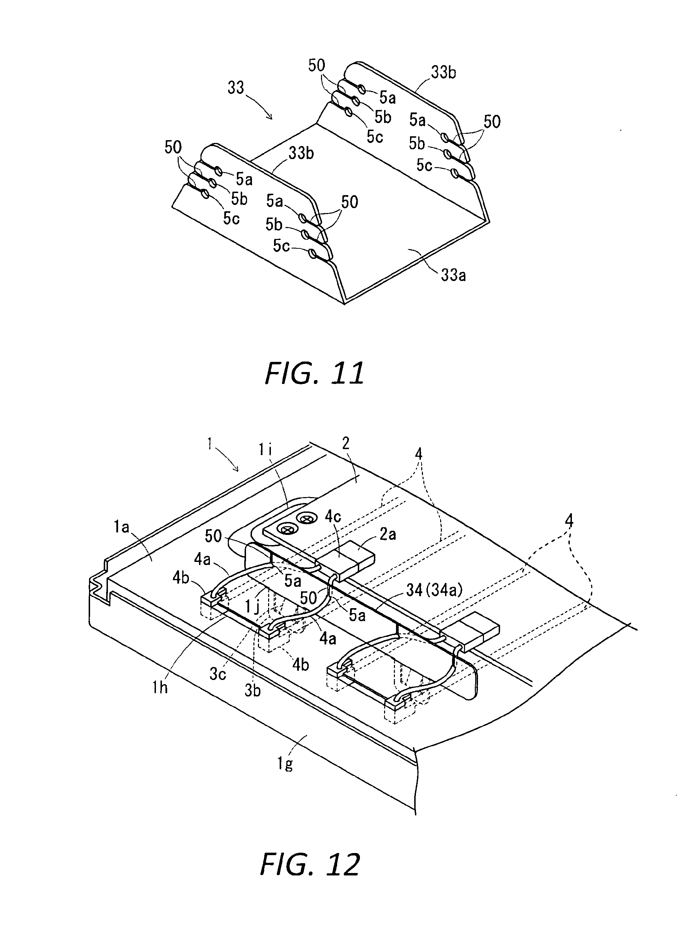

Referring now to FIGS. 10 and 11, a lead wire isolation structure for the liquid crystal module 1 in accordance with a fourth embodiment will now be explained. A plurality of isolation members 33 of this fourth embodiment is utilized in place of the isolation members 32 of the third embodiment.

In view of the similarity between the embodiments, the parts of the fourth embodiment that are identical to the parts of the first to third embodiments will be given the same reference numerals as the parts of the first to third embodiments. In any event, the descriptions of the parts of the fourth embodiment that are substantially identical to the parts of the first to third embodiments may be omitted for the sake of brevity. However, it will be apparent to those skilled in the art from this disclosure that the descriptions and illustrations of the first to third embodiments also apply to this fourth embodiment, except as discussed and/or illustrated herein.

As seen in FIG. 10, the isolation members 33 are used to isolate the two lead wires 4a of the cold cathode tubes 4 (e.g., a pair of lead wires and a pair of additional lead wires). Each of the isolation members 33 is integrally formed as one-piece, unitary member. As seen in FIG. 11, each of the isolation members 33 has a square bottom plate 32a and a pair of vertical plates 33b with an isosceles trapezoidal shape at both ends of the square bottom plate 33a. The plurality of pairs of left and right lead wire supports 5a, 5b, and 5c in the form of round holes and having difference spacings in between them are formed on both sides (left and right) of the vertical plates 33b. Cut-out grooves 50 that extend to the lead wire supports 5a, 5b, and 5c are formed on both side ends of the vertical plates 33b.

As seen in FIG. 10, the isolation members 33 are disposed between the two lead wires 4a of the cold cathode tubes 4. The bottom plate 33a is either fixed to the rear face of the rear frame 1a by a quick fixing means such as double-sided adhesive tape, or not fixed and is in a free state. The two lead wires 4a of each of the cold cathode tubes 4 are each supported at two locations by the selected pair of left and right lead wire supports with the optimal spacing of one of the vertical plates 33b (the lead wire supports 5b in FIG. 10) and the optimal pair of left and right lead wire supports with the optimal spacing of the other of the vertical plates 33b (the lead wire supports 5b in FIG. 10), and are isolated and fixed at an appropriate spacing in between them.

The rest of the structure of the lead wire isolation structure in the fourth embodiment is the same as that of the lead wire isolation structure in the first to third embodiments, so the components that are the same in FIG. 10 are numbered the same, and redundant descriptions will be omitted.

In addition to have the effects exhibited by the lead wire isolation structure of the third embodiment, the lead wire isolation structure in the fourth embodiment also exhibits an effect whereby the pair of left and right lead wire supports with the best spacing is selected according to the length of the lead wires 4a and the amount of voltage to be applied, and the lead wires 4a can be isolated and fixed at the optimal spacing in between them. Thus, the lead wire isolation structure of the fourth embodiment can be used for different liquid crystal modules with different lengths of the lead wires 4a of the cold cathode tubes 4 or different amounts of applied voltage.

### FIFTH EMBODIMENT

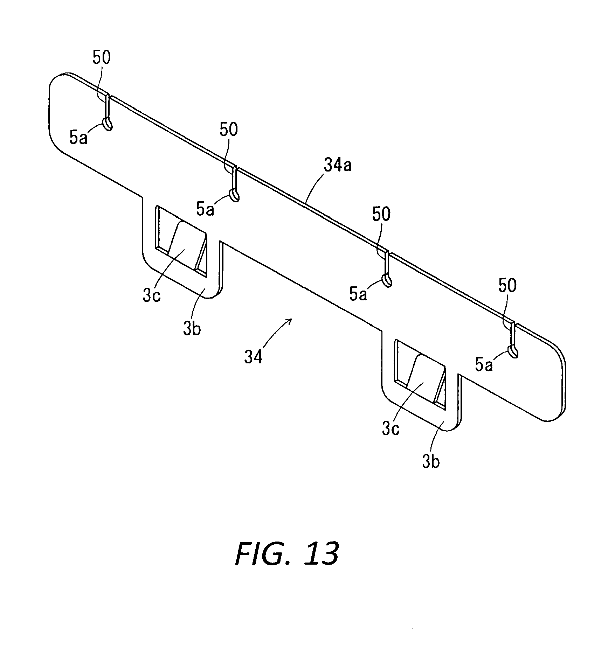

Referring now to FIGS. 12 and 13, a lead wire isolation structure for the liquid crystal module 1 in accordance with a fifth embodiment will now be explained. An isolation member 34 of this fifth embodiment is utilized in place of the isolation members 3 of the first embodiment.

In view of the similarity between the first embodiment and the fifth embodiment, the parts of the fifth embodiment that are identical to the parts of the first embodiment will be given the same reference numerals as the parts of the first embodiment. In any event, the descriptions of the parts of the fifth embodiment that are substantially identical to the parts of the first embodiment may be omitted for the sake of brevity. However, it will be apparent to those skilled in the art from this disclosure that the descriptions and illustrations of the first embodiment also apply to this fifth embodiment, except as discussed and/or illustrated herein.

As seen in FIG. 12, the isolation member 34 is used to isolate the two lead wires 4a of the cold cathode tubes 4. The isolation member 34 is integrally formed as one-piece, unitary member. As shown in FIG. 13, the isolation member 34 has a rectangular plate body 34a, a plurality of (two in FIG. 13) U-shaped insertion tabs 3b and a plurality of (two in FIG. 13) retainer hook 3c. The U-shaped insertion tabs 3b are integrally formed at a lower end portion of the rectangular plate body 34a, respectively. The retainer hooks 3c are formed at lower parts of the insertion tabs 3b, respectively, such that retainer hooks 3c rise up at a slight angle relative to the insertion tabs 3b, respectively. The rectangular plate body 34a is wider than it is high. The rectangular plate body 34a has two pairs of (four) lead wire supports 5a in the form of round holes. The lead wire supports 5a are formed with a specific spacing in between on an upper edge of the rectangular plate body 34a. Cut-out grooves 50 that extend downward to the lead wire supports 5a are formed from the upper end of the plate body 34a.

As seen in FIG. 12, the isolation member 34 is disposed so as to intersect the lead wires 4a of the cold cathode tubes 4. The insertion tabs 3b are inserted into slits 1j in the rear frame 1a. The retainer hooks 3c are latched from below onto the end edges of the slits 1j, respectively. As a result, the isolation member 34 is attached to the rear frame 1a. Furthermore, the four lead wires 4a (two for each of the two cold cathode tubes 4) are supported by four lead wire supports 5a of the isolation member 34, and are isolated and fixed at a suitable spacing.

The rest of the structure of the lead wire isolation structure in the fifth embodiment is the same as that of the lead wire isolation structure in the first embodiment, so the components that are the same in FIG. 12 are numbered the same, and redundant descriptions will be omitted.

With the lead wire isolation structure of the fifth embodiment described above, the four lead wires 4a of the two cold cathode tubes 4 are isolated at a spacing that is equal to the spacing between the lead wire supports 5a by the single isolation member 34. Furthermore, relatively positional relation of the lead wires 4a is fixed by the isolation member 34. Thus, the risk of fire or smoke caused by the lead wires 4a being in proximity or contact with each other is prevented. Furthermore, since the single isolation member 34 supports and mutually isolates the lead wires 4a of the plurality of cold cathode tubes 4 on lead wire supports 5a formed so as to be spaced apart from each other. Thus, the number of isolation member used is cut in half or decreased as compared to when the two lead wires 4a of the cold cathode tube 4 are isolated by a plurality of isolation member as in the first to fourth embodiments. Thus, fewer parts need to be used (only one in the fewest case).

Furthermore, a single isolation member with the lead wire supports 5a and the cut-out grooves 50, the number of which is the same as the total number of the lead wires 4a of all the cold cathode tubes 4 of the liquid crystal module, can be utilized in the liquid crystal module. In this case, all of the lead wires 4a can be isolated by the single isolation member. Since just one isolation member is needed, the increase in the number of parts can be kept to a minimum.

### GENERAL INTERPRETATION OF TERMS

In understanding the scope of the present invention, the term "comprising" and its derivatives, as used herein, are intended to be open ended terms that specify the presence of the stated features, elements, components and groups, but do not exclude the presence of other unstated features, elements, components and groups. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a liquid crystal module equipped with the present invention. Accordingly, these terms, as utilized to describe the present invention should be interpreted relative to a liquid crystal module equipped with the present invention as used in the normal operating position.

While a preferred embodiment have been chosen to illustrate the present invention, it will be apparent to those skilled in the art from these disclosures that various changes and modifications can be made herein without departing from the scope of the invention as defined in the appended claims. Furthermore, the foregoing descriptions of the preferred embodiment according to the present invention are provided for illustration only, and not for the purpose of limiting the invention as defined by the appended claims and their equivalents.

## Claims

1. A lead wire isolation structure for a liquid crystal module including a rear frame and a U-shaped cold cathode tube that is disposed inside the rear frame, the lead wire isolation structure comprising:
a pair of lead wires configured to be electrically coupled to the U-shaped cold cathode tube; and
an isolation member made of an electrical insulating material, the isolation member having a pair of lead wire supports at spaced apart locations on the isolation member, the lead wires being supported in the lead wire supports, respectively.

2. The lead wire isolation structure according to claim 1, wherein
the isolation member has a plate body with the lead wire supports at opposite side end portions of the plate body, an insertion tab that is formed at lower end of the plate body with the insertion tab being configured to be disposed through a slit that is formed on the rear frame, and a retainer hook that is formed on the insertion tab with the retainer hook being configured to engage an edge portion of the slit of the rear frame.

3. The lead wire isolation structure according to claim 2, wherein
the isolation member is integrally formed as one-piece, unitary member.

4. The lead wire isolation structure according to claim 2, wherein
the plate body further includes a pair of additional lead wire supports, the additional lead wire supports having a different spacing between the additional lead wire supports from spacing between the lead wire supports, the lead wires being selectively attached to one of the lead wire supports and the additional lead wire supports.

5. The lead wire isolation structure according to claim 1, wherein
the isolation member has a bottom plate that is configured to be disposed on the rear frame, and a pair of vertical plates that extends upward of the isolation member relative to the bottom plate from opposite side edges of the bottom plate, each of the vertical plates including the lead wire supports.

6. The lead wire isolation structure according to claim 5, wherein
the isolation member is integrally formed as one-piece, unitary member.

7. The lead wire isolation structure according to claim 5, wherein
the bottom plate of the isolation member is configured to be fixedly attached to a rear face of the rear frame.

8. The lead wire isolation structure according to claim 5, wherein
each of the vertical plates further includes a pair of additional lead wire supports, the additional lead wire supports having a different spacing between the additional lead wire supports from spacing between the lead wire supports, the lead wires being selectively attached to one of the lead wire supports and the additional lead wire supports.

9. The lead wire isolation structure according to claim 1, further comprising
a pair of additional lead wires configured to be electrically coupled to an additional U-shaped cold cathode tube that is disposed adjacent to the U-shaped cathode tube,
the isolation member further having a pair of additional lead wire supports, the additional lead wires being supported in the additional lead wire supports, respectively, the isolation member being integrally formed as one-piece, unitary member.

10. A liquid crystal module comprising:
a rear frame having a rear plate;
a U-shaped cold cathode tube disposed above the rear plate;
a pair of lead wires electrically coupled to the U-shaped cold cathode tube at one ends of the lead wires, respectively, the lead wires being disposed through an opening of the rear plate such that the other ends of the lead wires are disposed on a rear side of the rear plate;
an inverter board attached to a rear face of the rear plate, the inverter board being electrically coupled to the other end of the lead wires; and
an isolation member made of an electrical insulating material, the isolation member having a pair of lead wire supports at spaced apart locations on the isolation member, the lead wires being supported in the lead wire supports, respectively.

11. The liquid crystal module according to claim 10, wherein
the isolation member has a plate body with the lead wire supports at opposite side end portions of the plate body, an insertion tab that is formed at lower end of the plate body with the insertion tab being disposed through a slit that is formed on the rear plate of the rear frame, and a retainer hook that is formed on the insertion tab with the retainer hook engaging an edge portion of the slit of the rear plate of the rear frame.

12. The liquid crystal module according to claim 11, wherein
the isolation member is integrally formed as one-piece, unitary member.

13. The liquid crystal module according to claim 11, wherein
the plate body further includes a pair of additional lead wire supports, the additional lead wire supports having a different spacing between the additional lead wire supports from spacing between the lead wire supports, the lead wires being selectively attached to one of the lead wire supports and the additional lead wire supports.

14. The liquid crystal module according to claim 10, wherein
the isolation member has a bottom plate that is disposed on the rear frame, and a pair of vertical plates that extends upward of the isolation member relative to the bottom plate from opposite side edges of the bottom plate, each of the vertical plates including the lead wire supports.

15. The liquid crystal module according to claim 14, wherein
the isolation member is integrally formed as one-piece, unitary member.

16. The liquid crystal module according to claim 14, wherein
the bottom plate of the isolation member is fixedly attached to the rear face of the rear plate of the rear frame.

17. The liquid crystal module according to claim 14, wherein
each of the vertical plates further includes a pair of additional lead wire supports, the additional lead wire supports having a different spacing between the additional lead wire supports from spacing between the lead wire supports, the lead wires being selectively attached to one of the lead wire supports and the additional lead wire supports.

18. The liquid crystal module according to claim 10, further comprising
an additional U-shaped cold cathode tube disposed adjacent to the U-shaped cathode tube,
a pair of additional lead wires electrically coupled to the additional U-shaped cold cathode tube,
the isolation member further having a pair of additional lead wire supports, the additional lead wires being supported in the additional lead wire supports, respectively, the isolation member being integrally formed as one-piece, unitary member.
